# FASCICULE DE BREVET EUROPEEN

(11) **EP 3 767 504 B1**
(45) Date de publication et mention de la délivrance du brevet: **22.04.2026**
(21) Numéro de dépôt: 20184643.3
(22) Date de dépôt: 08.07.2020
(51) Int. Cl.: G06F 21/44, H04L 9/06, H04L 9/32, G06Q 30/00, G06Q 30/018, G06Q 20/36, G06Q 20/40, G07F 7/12

(54) **FONCTION A SENS UNIQUE**
EINWEGFUNKTION
ONE WAY FUNCTION

(30) Priorité: 15.07.2019 FR 1907911
(43) Date de publication de la demande: 20.01.2021
(73) Titulaire: STMicroelectronics (Rousset) SAS, 13790 Rousset (FR)
(72) Inventeur: BENVENISTE, Marc, 13100 AIX-EN-PROVENCE (FR); JOURNET, Fabien, 38000 GRENOBLE (FR); MARINET, Fabrice, 13790 CHATEAUNEUF LE ROUGE (FR)
(74) Mandataire: Cabinet Beaumont

(56) Documents cités:
- EP-A2- 1 430 391
- EP-A2- 1 840 731
- US-A1- 2016 164 672

## Description

### Domaine technique

La présente description concerne de façon générale les circuits et systèmes électroniques, et de façon plus particulière les dispositifs électronique adapté à mettre en oeuvre des fonctions à sens unique, utilisées, par exemple, dans un mécanisme de vérification de l'authenticité d'un produit associé à un consommable.

### Technique antérieure

La présence de consommables non authentiques d'un produit constitue un problème pour le fabriquant du produit et pour les fournisseurs autorisés des consommables authentiques, notamment lors de retours pour problèmes fonctionnels. Il est important de pouvoir distinguer les produits authentiques des produits non authentiques.

Les procédés d'authentification ont pour rôle de vérifier que le consommable apparié au produit est bien authentique ou autorisé. Pour cela, les consommables et les produits associés sont équipés de circuits électroniques exécutant des protocoles de vérification d'authenticité lors d'une mise en place d'un nouveau consommable, voire périodiquement.

Il serait souhaitable de pouvoir améliorer, au moins en partie, certains aspects des procédés d'authentification de produits et, plus particulièrement, certains aspects des procédés de mise en oeuvre de fonction utilisée dans les procédés d'authentification.

EP 1 430 391 A2 constitue l'état de la technique pertinent.

### Résumé de l'invention

La portée de l'invention est définie par les revendications indépendantes.

Il existe un besoin pour des procédés d'authentification de produits plus performants et mieux sécurisés.

Un mode de réalisation pallie tout ou partie des inconvénients des procédés d'authentification de produits connus.

Un mode de réalisation prévoit un procédé de mise en oeuvre d'une première fonction à sens unique, faisant partie d'une famille de fonctions à sens unique, par un dispositif : dans lequel une deuxième fonction prend en compte des états de noeuds numériques répartis dans des circuits du dispositif mettant en oeuvre des troisièmes fonctions ; lesdits états des noeuds dépendent d'un résultat précédent de la première fonction ; et dans lequel la deuxième fonction et/ou les troisièmes fonctions sont des fonctions à sens unique.

Selon un mode de réalisation, la première fonction est sélectionnée parmi ladite famille de fonctions à sens unique en utilisant un paramètre (P) fourni par une fonction d'activation (555) pour configurer les troisièmes fonctions.

Selon un mode de réalisation, la première fonction est sélectionnée parmi ladite famille de fonctions à sens unique en utilisant le résultat R précédent pour influer sur la configuration des troisièmes fonctions.

Selon un mode de réalisation, ledit résultat précédent de la première fonction influe sur les résultats des troisièmes fonctions.

Selon un mode de réalisation, ledit résultat est utilisé, en outre, pour modifier des signaux d'horloge du dispositif.

Selon un mode de réalisation, ledit résultat est utilisé, en outre, pour modifier des signaux d'horloge influant sur la mise en oeuvre des troisièmes fonctions.

Un autre mode de réalisation prévoit un procédé d'authentification d'un premier dispositif électronique par un deuxième dispositif électronique, utilisant le procédé décrit précédemment.

Un autre mode de réalisation prévoit un procédé de chiffrement utilisant le procédé décrit précédemment.

Un autre mode de réalisation prévoit un procédé de hachage utilisant le procédé décrit précédemment.

Un autre mode de réalisation prévoit un dispositif électronique comprenant un circuit adapté à mettre en oeuvre le procédé décrit précédemment.

Selon un mode de réalisation, le dispositif est un consommable.

Selon un mode de réalisation, le dispositif est adapté à mettre en oeuvre le procédé d'authentification décrit précédemment.

Selon un mode de réalisation, le dispositif est adapté à mettre en oeuvre le procédé de chiffrement décrit précédemment.

Selon un mode de réalisation, le dispositif est adapté à mettre en oeuvre le procédé de hachage décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un circuit électronique du type équipant un consommable et un produit ;
la figure 2 représente, de façon très schématique et sous forme de blocs, un mode de réalisation d'un circuit faisant partie d'un circuit d'authentification ;
la figure 3 représente, de façon très schématique et sous forme de blocs, un autre mode de réalisation du circuit de la figure 2 ; et
la figure 4 représente un organigramme illustrant un mode de réalisation d'un procédé d'authentification.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

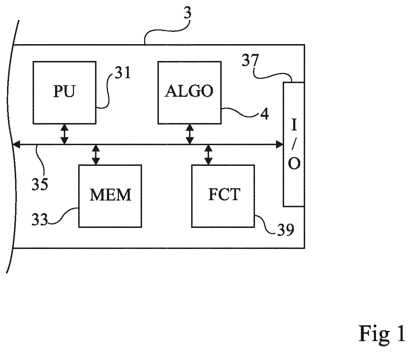

Dans la suite de la description, on appellera un consommable, un dispositif électronique adapté à être couplé à un produit électronique pour fonctionner. Les consommables sont généralement interchangeables une fois leur utilisation terminée. A titre d'exemple, une carte mémoire est un consommable vis-à-vis d'un appareil photo numérique. Il en est de même pour une cartouche d'encre vis-à-vis d'une imprimante, d'une batterie interchangeable vis-à-vis d'un téléphone portable, une cartouche de liquide vis-à-vis d'une cigarette électronique, une cartouche de jeu vidéo vis-à-vis d'une console. Les modes de réalisation décrits en relation avec les figures 1 à 4 sont applicables à tout couple consommable-produit.

La figure 1 représente, de façon très schématique et sous forme de blocs, un mode de réalisation d'un circuit, ou dispositif, électronique 3 du type de ceux équipant un dispositif et un consommable.

Le circuit 3 comprend :
- une entité de calcul 31 (PU), par exemple une machine d'états, un microprocesseur, un circuit logique programmable, etc. ;
- une ou plusieurs zones 33 (MEM) de stockage volatile et/ou non volatile pour stocker tout ou partie des données et programmes ;
- un ou plusieurs bus 35 de données, d'adresses et/ou de commandes entre les différents éléments internes au circuit 3 ;
- une interface d'entrée-sortie 37 (I/O) de communication avec l'extérieur du circuit 3 ; et
- divers autres circuits en fonction de l'application, symbolisés en figure 1 par un bloc 39 (FCT).

Selon le mode de réalisation représenté, le circuit 3 comprend en outre un circuit ou une fonction d'authentification 4 (ALGO) mettant en oeuvre un procédé d'authentification. Pour cela, le bloc 4 est un dispositif exécutant des fonctions cryptographiques de façon matérielle (logique câblée) pour, par exemple, mettre en oeuvre un procédé d'authentification.

On prévoit un mécanisme d'authentification basé sur une signature, ou un code, qui a la particularité d'être liée à la topographie du circuit intégré ou de la partie du circuit participant à l'authentification et exécutant cette signature. On fera par la suite référence au circuit d'authentification mais ce qui est décrit peut ne concerner qu'une partie de ce circuit. Par topographie, on entendra ici la disposition des composants formant le circuit 3 sur une puce électronique ou sur un substrat.

On prévoit également d'équiper des produits et des consommables de circuits d'authentification identiques, c'est-à-dire présentant des topographies identiques, de façon qu'un traitement exécuté sur un des circuits se traduise, lorsqu'il est exécuté sur l'autre circuit, par un comportement identique de ce dernier. Par comportement, on entend que le comportement électrique du circuit est identique lors de l'exécution d'un calcul, d'un programme ou d'opérations identiques.

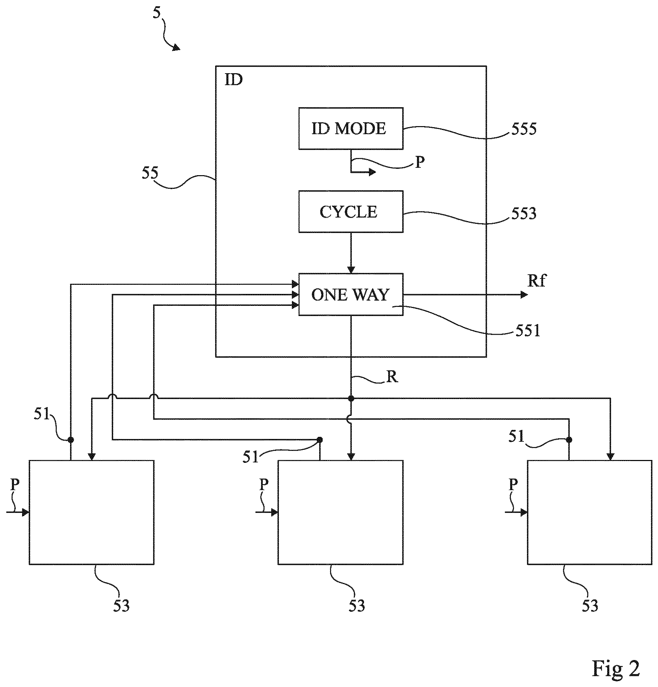

La figure 2 représente, très schématiquement et sous forme de blocs, un mode de réalisation d'un circuit 5 mettant en oeuvre une fonction utilisée par le circuit d'authentification 4 faisant lui-même partie du circuit 3 de la figure 1. Autrement dit, le circuit 5 fait partie du circuit 4.

Le circuit 5 est adapté à mettre en oeuvre une fonction à sens unique pouvant être utilisés dans un procédé d'authentification.

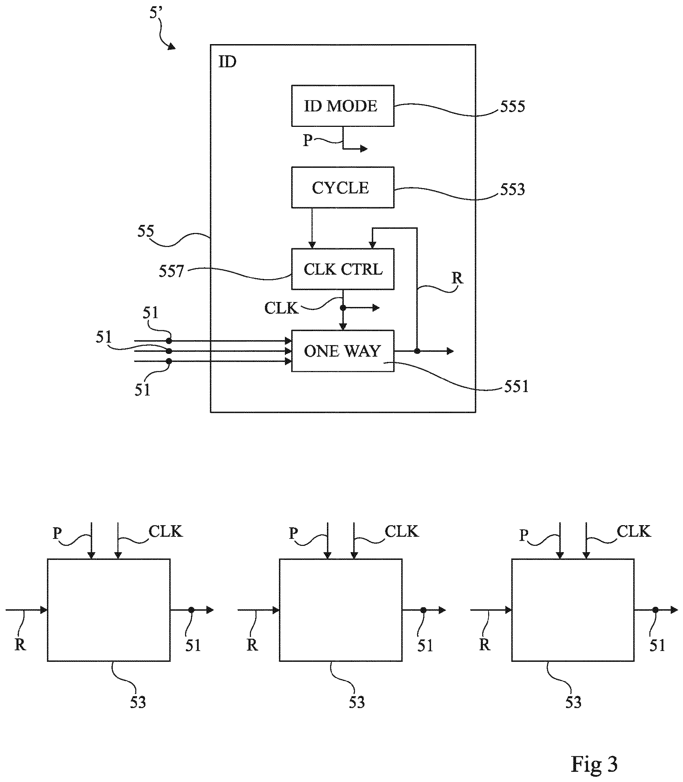

Le circuit 5 comprend différents circuits logiques 53 mettant en oeuvre des fonctions cryptographiques. Le circuit 5 comprend au moins deux circuits logiques 53 (trois circuits 53 sont représentées en figure 3). Plus le circuit 5 comprend de circuits logiques 53, plus la fonction mise en oeuvre par le circuit 5 est complexe. Des noeuds d'entrée et de sortie de ces circuits logiques 53 sont des points, ou noeuds, numériques 51 du circuit 5, ayant des états haut, "1", ou des états bas, "0". A titre de variante, les noeuds 51 peuvent être aussi des noeuds internes aux circuits logiques 53. La répartition des noeuds numériques 51 dépend de la topographie du circuit 5. Le nombre de noeuds 51 prélevés par le circuit 5 et dont les états électriques sont pris en compte pour la signature conditionne la robustesse de la signature calculée. Par exemple, on prévoit que les circuits 53 fournissent chacun 64 noeuds internes pour obtenir une fonction complexe.

Les circuits 53 sont, en outre, utilisé par le circuit 4 pour d'autres opérations, par exemple, des opérations de chiffrement, des opérations de hachage, etc. La répartition des noeuds 51 des circuits 53 pris en compte dans le calcul de signature dépend de l'application de la fonction du circuit 5. Plus les noeuds sont répartis dans une surface importante du circuit 3, plus la fonction à sens unique mise en oeuvre par le circuit 5 est complexe.

Le circuit 5 comprend, en outre, un dispositif principal représenté par un bloc 55 (ID). Le dispositif 55 comprend plus particulièrement :
- un bloc 551 (ONE-WAY) représentant une fonction cryptographique ;
- un bloc 553 (CYCLE) représentant une fonction de gestion d'un compte de cycles, ou d'itérations ; et
- un bloc 555 (ID MODE) représentant une fonction d'activation d'un procédé d'authentification.

La fonction cryptographique du bloc 551 est une fonction adaptée à fournir un résultat appelé code R à partir d'états des noeuds 51. Plus généralement, le bloc 551 est adapté à mettre en oeuvre une famille de fonctions capables de fournir le résultat R, pour choisir quelle fonction de la famille de fonctions est mise en oeuvre, les blocs 53 peuvent recevoir un paramètre P provenant du bloc 555. Autrement dit, le paramètre P permet de configurer la fonction cryptographique mise en oeuvre par chaque bloc 53. La fonction, sélectionnée et mise en oeuvre par le bloc 551, peut être utilisée sur plusieurs itérations, dont le nombre est géré par la fonction du bloc 553. Selon un mode de réalisation, à chaque nouvelle itération, le code R ou des portions du code R calculées à l'itération précédente sont injectées dans les circuits 53 pour modifier leurs états internes et donc leur fonctionnement. Plus particulièrement, l'injection du code R ou de portions du code R ajoute des arguments aux fonctions mises en oeuvre par les circuits 53 ce qui en modifie donc le fonctionnement desdites fonctions. L'état des points numériques 51 en est donc modifié. Cela a pour but de complexifier le calcul du code R. Une fois les itérations terminées, la fonction du circuit 5 fournit une signature finale Rf.

Lorsque la fonction du circuit 5 est utilisée pour un procédé d'authentification, la fonction de calcul de signature exécutée par le bloc 551 n'a pas besoin d'être complexe. En effet, l'important est que la signature finale Rf soit produite par deux circuits d'authentification identiques. Ainsi, n'importe quel calcul convient, par exemple une fonction de hachage, voire même une comparaison directe d'un mot représentant l'ensemble des états prélevés. Toutefois, prévoir une combinaison ou un traitement cryptographique ou une fonction à sens unique pour calculer une signature accroit la robustesse de l'authentification. Plus particulièrement, la fonction du bloc 551 est par exemple une fonction à sens unique de préférence une fonction de hachage. Si la fonction du bloc 551 n'est pas une fonction à sens unique, alors au moins une fonction des blocs 53 est une fonction à sens unique.

La fonction d'activation d'un procédé d'authentification du bloc 555 est une fonction permettant de démarrer un procédé d'activation du circuit 3 de la figure 1.

Dans cet exemple, un procédé d'authentification du circuit consiste à générer une signature, ou un code, avec la fonction mise en oeuvre par le circuit 5. Lors d'une phase initiale, ou première itération, les circuits 53 sont initialisés par le processeur 31, ou alors sont laissés dans leur état initial. Ainsi, les états des noeuds 51 sont à un état initial, et un premier code R est chargé par la fonction du bloc 551 à partir de ces états. Pendant les itérations suivantes, le code R de l'itération précédente est utilisé pour modifier les fonctions mises en oeuvre par les blocs 53. Ainsi, à chaque itération, les états des noeuds 51 sont modifiés, et un nouveau code R est généré à partir de ces états et du code R de l'itération précédente.

La figure 3 représente, très schématiquement et sous forme de blocs, un autre mode de réalisation d'un circuit d'authentification 5'.

Le circuit 5' de la figure 5 comprends des éléments communs avec le circuit 5 de la figure 3. Ces éléments ne seront pas détaillés à nouveau ci-après.

Le circuit 5' comprend, en outre, un bloc 557 (CLK CTRL) représentant une fonction de gestion de différents signaux d'horloges utilisés par les circuits 53 et par la fonction du bloc 551 de la figure 2. Le bloc 557 fournit ainsi un ou plusieurs signaux d'horloge CLK aux circuits 53 et au bloc 551.

Le bloc 557 peut recevoir des informations du bloc 551, par exemple le code R ou des portions du code R. Ces informations peuvent permettre, par exemple, de modifier les signaux d'horloge, par exemple en déclenchant ou non un nouveau cycle, ou en modifiant les fréquences des signaux d'horloge. Plus particulièrement, le code R peut être utilisé pour ralentir ou accélérer les exécutions des fonctions mises en oeuvre par les circuits 53, et ainsi modifier le code R de l'itération suivante en modifiant les états des noeuds 51.

Un avantage de ce mode de réalisation est que l'utilisation du code R pour modifier les signaux d'horloge permet de complexifier encore l'obtention de la signature finale Rf.

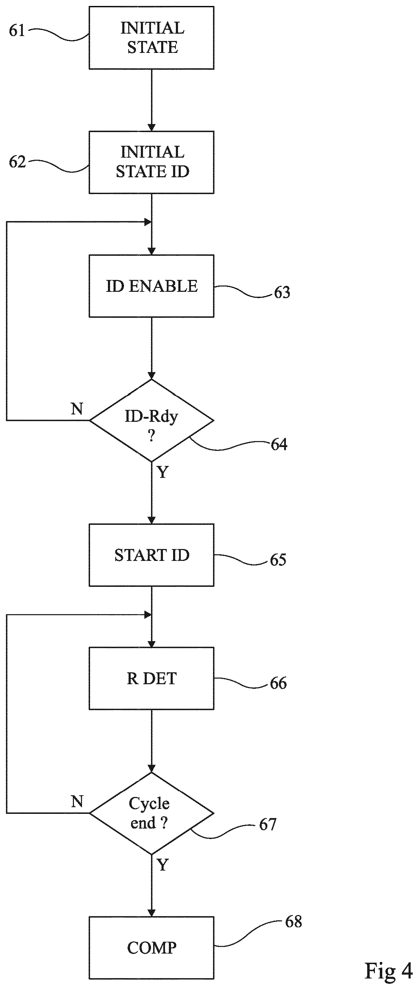

La figure 4 est un organigramme illustrant un mode de mise en oeuvre d'un exemple de procédé d'authentification utilisant l'un des circuits 5 ou 5' décrits en relation avec les figures 2 ou 3. A titre d'exemple, ce procédé d'authentification peut être mise en oeuvre par un produit et un consommable.

A une étape 61 (INITIAL STATE), le circuit 5 est mis en contact, filaire ou sans fil, avec un autre circuit qui lui est identique, ou qui comprend des parties d'un circuit d'authentification identiques. Le procédé d'authentification est alors démarré par les fonctions d'activation du procédé d'authentification (bloc 555) de chaque circuit 3, par exemple par un échange d'une première donnée. Une première étape est l'initialisation des circuits logiques des blocs 53.

A une étape 62 (INITIAL STATE ID), les fonctions composant le dispositif d'authentification 55 sont initialisées. A titre d'exemple, le paramètre P de sélection de la fonction du bloc 551 est généré.

A une étape 63 (ID ENABLE), un signal de commande demande l'activation du mode d'authentification du circuit 3.

A une étape 64 (ID RDY), il est vérifié si le mode d'authentification est prêt à être utilisé. Si l'activation de ce mode n'est pas possible (sortie N du bloc 64) alors l'étape suivante est à nouveau l'étape 62, sinon (sortie Y du bloc 64) l'étape suivante est l'étape 65.

A l'étape 65 (START ID), le procédé d'authentification commence.

A une étape 66 (R DET), le premier code R est généré par la fonction de signature du bloc 551, à partir des états des points numériques 51. Les itérations commencent alors et le code est modifié au fil de celles-ci, pour fournir finalement la signature finale Rf.

A une étape 67 (Cycle End ?), la fonction du bloc 553 vérifie si le nombre d'itérations défini par la fonction du bloc 553 est atteint. Si c'est le cas (sortie Y du bloc 67) l'étape suivante est une étape 68 (COMP). Si ce n'est pas le cas (sortie N du bloc 67) alors l'étape suivante est à nouveau l'étape 66, et la fonction de signature continue les itérations.

A l'étape 68, la signature finale Rf du circuit 3 est obtenue, et elle peut être comparée à la signature obtenue parallèlement par le circuit auprès duquel le circuit 3 souhaite s'authentifier. Si les deux signatures sont identiques alors l'authentification a réussi, sinon elle a échoué.

Selon une variante de réalisation, l'étape 68 peut être une étape de liaison vers d'autres calculs prenant en entrée la signature finale Rf.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Les modes de réalisation décrits sont des modes de réalisation simplifiés pour exposer les principes de l'authentification réalisée. Les calculs et les échanges pourront s'accompagner de toute mesure de protection par ailleurs usuelle, par exemple un chiffrement symétrique ou asymétrique des transmissions entre les circuits à authentifier.

De plus, la fonction à sens unique du circuit 5 peut être utilisé de la même façon qu'une fonction à sens unique, c'est-à-dire, par exemple, pour un procédé d'authentification de circuit, pour un procédé de chiffrement de données, ou pour un procédé de hachage de données.

## Revendications

1. Procédé de mise en oeuvre d'une première fonction à sens unique, faisant partie d'une famille de fonctions à sens unique, par un circuit (5') adapté à mettre en oeuvre ladite famille de fonctions dans lequel :
- une deuxième fonction (551) du circuit (5') prend en compte des états de noeuds numériques (51) répartis dans au moins deux circuits logiques (53) du circuit (5') mettant en oeuvre des troisièmes fonctions ;
- lesdits états des noeuds (51) dépendent d'un résultat (R) précédent de la deuxième fonction (551) injecté aux circuits logiques (53) ; et
- dans lequel la deuxième fonction (551) et/ou les troisièmes fonctions sont des fonctions à sens unique, dans lequel la première fonction est sélectionnée par la deuxième fonction (551) parmi ladite famille de fonctions à sens unique en utilisant :
un paramètre (P) fourni aux circuits logiques (53) par une fonction d'activation (555) du circuit (5') pour configurer les troisièmes fonctions, et/ou
le résultat R précédent injecté aux circuits logiques (53) par la deuxième fonction (551) pour influer sur la configuration des troisièmes fonctions.

2. Procédé selon la revendication 1, dans lequel un résultat précédent de la première fonction influe sur un résultat des troisièmes fonctions.

3. Procédé selon la revendication 1 ou 2, dans lequel ledit résultat (R) est utilisé, en outre, pour modifier des signaux d'horloge (CLK) du circuit (5')

4. Procédé selon la revendication 3, dans lequel ledit résultat (R) est utilisé, en outre, pour modifier les signaux d'horloge (CLK) influant sur les troisièmes fonctions.

5. Procédé d'authentification d'un premier dispositif électronique par un deuxième dispositif électronique, utilisant le procédé selon l'une quelconque des revendications 1 à 4.

6. Procédé de chiffrement utilisant le procédé selon l'une quelconque des revendications 1 à 4.

7. Procédé de hachage utilisant le procédé selon l'une quelconque des revendications 1 à 4.

8. Dispositif électronique (3) comprenant un circuit (5') adapté à mettre en oeuvre le procédé selon l'une quelconque des revendications 1 à 4.

9. Dispositif selon la revendication 8, étant un consommable.

10. Dispositif selon la revendication 8 ou 9, étant adapté à mettre en oeuvre le procédé selon la revendication 5.

11. Dispositif selon la revendication 8 ou 9, étant adapté à mettre en oeuvre le procédé selon la revendication 6.

12. Dispositif selon la revendication 8 ou 9, étant adapté à mettre en oeuvre le procédé selon la revendication 7.

## Patentansprüche

1. Ein Verfahren zur Implementierung einer ersten Einwegfunktion, die Teil einer Familie von Einwegfunktionen ist, durch eine Schaltung (5'), die zur Implementierung dieser Familie von Funktionen geeignet ist, wobei:
- eine zweite Funktion (551) der Schaltung (5') Zustände von digitalen Knoten (51) berücksichtigt, die in mindestens zwei Logikschaltungen (53) der Schaltung (5') verteilt sind, die dritte Funktionen implementieren;
- die Zustände der Knoten (51) von einem vorherigen Ergebnis (R) der zweiten Funktion (551) abhängen, das in die Logikschaltungen (53) eingespeist wird; und
- wobei die zweite Funktion (551) und/oder die dritten Funktionen Einwegfunktionen sind,
wobei die erste Funktion durch die zweite Funktion (551) aus der Familie von Einwegfunktionen ausgewählt wird, indem verwendet wird:
ein Parameter (P), der den Logikschaltungen (53) durch eine Freigabefunktion (555) der Schaltung (5') zur Konfiguration der dritten Funktionen bereitgestellt wird, und/oder
das vorherige Ergebnis (R), das durch die zweite Funktion (551) in die Logikschaltungen (53) eingespeist wird, um die Konfiguration der dritten Funktionen zu beeinflussen.

2. Das Verfahren gemäß Anspruch 1, wobei ein vorheriges Ergebnis der ersten Funktion einen Einfluss auf ein Ergebnis der dritten Funktionen hat.

3. Das Verfahren gemäß Anspruch 1 oder 2, wobei das Ergebnis (R) ferner verwendet wird, um Taktsignale (CLK) der Schaltung (5') zu modifizieren.

4. Das Verfahren gemäß Anspruch 3, wobei das Ergebnis (R) ferner verwendet wird, um die Taktsignale (CLK) zu modifizieren, die einen Einfluss auf die dritten Funktionen haben.

5. Ein Verfahren zur Authentifizierung einer ersten elektronischen Vorrichtung durch eine zweite elektronische Vorrichtung unter Verwendung des Verfahrens gemäß einem der Ansprüche 1 bis 4.

6. Ein Verschlüsselungsverfahren unter Verwendung des Verfahrens gemäß einem der Ansprüche 1 bis 4.

7. Ein Hash-Verfahren unter Verwendung des Verfahrens gemäß einem der Ansprüche 1 bis 4.

8. Eine elektronische Vorrichtung (3) mit einer Schaltung (5'), die zur Durchführung des Verfahrens gemäß einem der Ansprüche 1 bis 4 geeignet ist.

9. Die Vorrichtung gemäß Anspruch 8, wobei diese ein Verbrauchsmaterial ist.

10. Die Vorrichtung gemäß Anspruch 8 oder 9, die zur Umsetzung des Verfahrens gemäß Anspruch 5 geeignet ist.

11. Die Vorrichtung gemäß Anspruch 8 oder 9, die zur Umsetzung des Verfahrens gemäß Anspruch 6 geeignet ist.

12. Die Vorrichtung gemäß Anspruch 8 oder 9, die zur Umsetzung des Verfahrens gemäß Anspruch 7 geeignet ist.

## Claims

1. A method of implementation of a first one-way function, being part of a family of one-way functions, by a circuit (5') suitable to implement said family of functions, wherein:
- a second function (551) of the circuit (5') takes into account states of digital nodes (51) distributed in at least two logic circuits (53) of the circuit (5') implementing third functions;
- said states of the nodes (51) depend on a previous result (R) of the second function (551) injected into logic circuits (53); and
- wherein the second function (551) and/or the third functions are one-way functions,
wherein the first function is selected by the second function (551) from said family of one-way functions by using:
a parameter (P) provided to the logic circuits (53) by an enabling function (555) of the circuit (5') to configure the third functions, and/or
the previous result (R) injected into the logic circuits (53) by the second function (551) to have an influence on the configuration of the third functions.

2. The method according to claim 1, wherein a previous result of the first function has an influence on a result of the third functions.

3. The method according to claim 1 or 2, wherein said result (R) is further used to modify clock signals (CLK) of the circuit (5').

4. The method according to claim 3, wherein said result (R) is further used to modify the clock signals (CLK) having an influence on the third functions.

5. A method of authentication of a first electronic device by a second electronic device, using the method according to any one of claims 1 to 4.

6. A cipher method using the method according to any one of claims 1 to 4.

7. A hash method using the method according to any one of claims 1 to 4.

8. An electronic device (3) comprising a circuit (5') suitable to implement the method according to any one of claims 1 to 4.

9. The device according to claim 8, being a consumable.

10. The device according to claim 8 or 9, being suitable to implement the method according to claim 5.

11. The device according to claim 8 or 9, being suitable to implement the method according to claim 6.

12. The device according to claim 8 or 9, being suitable to implement the method according to claim 7.
